# EUROPÄISCHE PATENTSCHRIFT

(11) **EP 2 014 521 B1**
(45) Veröffentlichungstag und Bekanntmachung des Hinweises auf die Patenterteilung: **31.08.2011**
(21) Anmeldenummer: 08010008.4
(22) Anmeldetag: 31.05.2008
(51) Int. Cl.: B60R 21/015, B60R 22/46

(54) **Sicherheitsanordnung mit einer Airbageinrichtung und Verfahren zur Steuerung der Sicherheitsanordnung**
Safety assembly with an airbag device and method for controlling the safety assembly
Agencement de sécurité doté d'un dispositif d'airbag et procédé de commande de l'installation de sécurité

(30) Priorität: 13.07.2007 DE 102007032714
(43) Veröffentlichungstag der Anmeldung: 14.01.2009
(73) Patentinhaber: GM Global Technology Operations LLC, Detroit, MI 48265-3000 (US)
(72) Erfinder: Rick, Ulrich, 55595 Roxheim (DE)
(74) Vertreter: Strauss, Peter

(56) Entgegenhaltungen:
- EP-A- 0 917 996
- WO-A-01/00459
- DE-A1- 10 346 625
- US-A- 5 558 370
- US-A1- 2005 040 632

## Beschreibung

Die vorliegende Erfindung betrifft ein Verfahren zur Steuerung einer Sicherheitsanordnung in einem Kraftfahrzeug mit einer Airbageinrichtung. Die vorliegende Erfindung betrifft ferner eine Sicherheitsanordnung in einem Kraftfahrzeug mit einer Airbageinrichtung.

Aus dem Stand der Technik sind Sicherheitsanordnungen in Kraftfahrzeugen bekannt, die eine Airbageinrichtung bestehend aus einem aufblasbaren Gassack und dem Gasgenerator zum Aufblasen des Gassacks aufweisen. Die bekannten Sicherheitsanordnungen umfassen ferner einen Kraftfahrzeugsitz, wobei die Airbageinrichtung dem Kraftfahrzeugsitz zugeordnet sind, d. h. der aufzublasende Gassack der Airbageinrichtung dient dem Schutz des Fahrzeuginsassen auf dem Kraftfahrzeugsitz. Derartige Sicherheitsanordnungen sind insbesondere von dem Beifahrersitz bekannt, bei dem die Airbageinrichtung in Sitzrichtung vor dem Beifahrersitz innerhalb der vorderen Konsole angeordnet ist.

Der bekannte aufzublasenden Gassack der Airbageinrichtung dient zwar dem Schutz des Fahrzeuginsassen, jedoch kann von der Airbageinrichtung jedoch auch eine Gefährdung des Fahrzeuginsassen ausgehen, insbesondere wenn ein Babysitz auf dem Kraftfahrzeugsitz angeordnet ist, der aufgrund seiner Größe besonders nah an der Airbageinrichtung angeordnet ist. Zur Lösung dieses Problems wird im Stand der Technik vorgeschlagen, dass die Airbageinrichtung manuell ausgeschaltet werden kann, wenn ein Babysitz auf dem zugeordneten Kraftfahrzeugsitz angeordnet wird, um das Kind vor dem sich entfaltenden Gassack zu schützen. Dies hat sich bewährt, jedoch können die bekannten Sicherheitsanordnungen keinen sicheren Schutz des normalen, erwachsenen Fahrzeuginsassen vor dem sich entfaltenden Gassack der Airbageinrichtung gewährleisten.

Die WO 01/00459 A1 und die US 2005/0040632 A1 beschreiben jeweils eine Sicherheitsanordnung in einem Kraftfahrzeug, bei der die Sitzposition des Fahrzeuginsassen durch unmittelbare optische Erfassung desselben ermittelt wird. Sollte die Ermittlung der Sitzposition zu dem Ergebnis führen, dass sich der Fahrzeuginsasse gefährlich nahe an der Airbageinrichtung befindet, so wird die Airbageinrichtung leistungsmäßig gedrosselt und gegebenenfalls ganz abgeschaltet. Ein konstruktives Beispiel zur Reduzierung der Leistung der Airbageinrichtung ist in der EP 0 917 996 A2 beschrieben. Die bekannten Sicherheitsanordnungen sind jedoch störanfällig, aufwendig und kostenintensiv, was insbesondere auf die Notwendigkeit einer Beleuchtungsquelle und einer Bilderfassungseinrichtung zurückzuführen ist.

Die DE 103 46 625 A1 offenbart hingegen eine Sicherheitsanordnung in einem Kraftfahrzeug, bei der die Airbageinrichtung entweder leistungsmäßig gedrosselt oder deaktiviert wird, wenn die Gurtauszugslänge des dem Fahrzeuginsassen zugeordneten Sicherheitsgurtes einem Gurtauszugslängengrenzwert überschreitet. Die bekannte Sicherheitsanordnung ist weniger aufwendig, kostenintensiv und störanfällig als die zuvor beschriebenen Sicherheitsanordnungen, bei denen die Sitzposition des Fahrzeuginsassen durch unmittelbare optische Erfassung desselben ermittelt wird, jedoch besteht der Nachteil, dass nicht in jedweder Sitzposition der optimale bzw. bestmögliche Schutz des Fahrzeuginsassen gewährleistet ist.

Es ist daher eine Aufgabe der vorliegenden Erfindung, ein Verfahren zur Steuerung einer Sicherheitsanordnung in einem Kraftfahrzeug mit einer Airbageinrichtung anzugeben, das einen sicheren Schutz des Kraftfahrzeuginsassen in jedweder Sitzposition auf dem Kraftfahrzeugsitz und einen einfachen Aufbau der Sicherheitsanordnung gewährleistet. Der vorliegenden Erfindung liegt ferner die Aufgabe zugrunde, eine Sicherheitsanordnung in einem Kraftfahrzeug mit einer Airbageinrichtung zu schaffen, die einen sicheren Schutz des Fahrzeuginsassen in jedweder Sitzposition gewährleistet und einen einfachen Aufbau hat.

Diese Aufgabe wird durch die in den Patentansprüchen 1 bzw. 9 angegebenen Merkmale gelöst. Vorteilhafte Ausführungsformen der Erfindung sind Gegenstand der Unteransprüche.

Das erfindungsgemäße Verfahren dient der Steuerung einer Sicherheitsanordnung in einem Kraftfahrzeug mit einer Airbageinrichtung und einem Sicherheitsgurt für den Fahrzeuginsassen, die einem Kraftfahrzeugsitz zugeordnet sind. Das Verfahren weist die folgenden Verfahrensschritte auf. Zunächst wird die Sitzposition des Fahrzeuginsassen auf dem Kraftfahrzeugsitz erfasst. So wird erfasst, ob der Fahrzeuginsasse eine vorbestimmte Normalposition, eine erste Gefahrenposition oder eine zweite Gefahrenposition eingenommen hat. In der ersten Gefahrenposition ist der Fahrzeuginsasse derart aus der Normalposition bewegt, dass eine Gefährdung für den Fahrzeuginsassen besteht. So kann sich der Fahrzeuginsasse beispielsweise derart weit nach vorne gelehnt haben, dass sich eines seiner Köperteile, meistens der Kopf, in unmittelbarer Nähe zu der Airbageinrichtung befindet. Ein sich entfaltender Gassack würde dann zu einer Verletzung des Fahrzeuginsassen führen. Um dies zu verhindern wird die Leistung der Airbageinrichtung reduziert, wenn die erfasste Sitzposition der ersten Gefahrenposition entspricht.

Durch das Reduzieren der Leistung der Airbageinrichtung, die beispielsweise durch ein Reduzieren der Leistung eines Gasgenerators der Airbageinrichtung erfolgen kann, entfaltet sich ein Gassack der Airbageinrichtung nicht mehr mit einer Wucht, die zu einer Verletzung des in der Gefahrenposition befindlichen Fahrzeuginsassen führen kann, dessen Kopf in der Gefahrenposition beispielsweise unmittelbar vor der Airbageinrichtung angeordnet sein kann. Dennoch gewährleistet die reduzierte Leistung der Airbageinrichtung weiterhin ein sicheres Auffangen des Fahrzeuginsassen bei einem Kraftfahrzeugzusammenstoß. Darüber hinaus ist eine automatische Anpassung der Airbageinrichtung an die jeweilige Sitzposition des Fahrzeuginsassen sichergestellt, die sich während der Fahrt ändern kann, wenn sich der Fahrzeuginsasse beispielsweise nach vorne lehnt. Ein manuelles Betätigen zum Ein- oder Ausschalten der Airbageinrichtung, wie dies bei der Anbringung eines Kindersitzes häufig erforderlich ist, entfällt, wodurch die Handhabung der Sicherheitsanordnung wesentlich vereinfacht ist.

In der vorbestimmten zweiten Gefahrenposition ist der Fahrzeuginsasse weiter aus der Normalposition bewegt ist als in der ersten Gefahrenposition. So wird die Airbageinrichtung ausgeschaltet, wenn die Sitzposition der zweiten Gefahrenposition entspricht. Dies ist insofern von Vorteil, als dass der Fahrzeuginsasse in der zweiten Gefahrenposition derart gegenüber der Airbageinrichtung angeordnet ist, dass ein Entfalten des Gassacks der Airbageinrichtung selbst bei reduzierter Leistung der Airbageinrichtung zu einer Verletzung des Fahrzeuginsassen führen würde. Konsequenterweise wird die Airbageinrichtung dann ganz ausgeschaltet, um das Verletzungsrisiko zu verringern.

Der Verfahrensschritt des Erfassens der Sitzposition umfasst das Erfassen der Gurtauszugslänge des Sicherheitsgurtes. Hier wird demzufolge die Gurtauszugslänge als Kriterium zur Beurteilung der Sitzposition des Fahrzeuginsassen herangezogen, die besonders einfach ermittelt werden kann, beispielsweise mit Hilfe einer entsprechenden Sensorik innerhalb eines Gurtaufrollers oder Gurtstraffers.

Dabei wird die erste Gefahrenposition erfasst, wenn die Gurtauszugslänge größer als ein vorbestimmter unterer Auszugslängengrenzwert oder gleich dem unteren Auszugslängengrenzwert ist. Mit dem unteren Auszugslängengrenzwert wird somit gleichzeitig ein Grenzwert für die Gurtauszugslänge vorgegeben, bis zu dem von einer Normalposition des Fahrzeuginsassen ausgegangen werden kann.

Die zweite Gefahrenposition wird hingegen erfasst, wenn die Gurtauszugslänge größer als ein vorbestimmter oberer Auszugslängengrenzwert oder gleich dem oberen Auszugslängengrenzwert ist, wobei der obere Auszugslängengrenzwert größer als der untere Auszugslängengrenzwert ist. Mit dem oberen Auszugslängengrenzwert wird somit gleichzeitig ein Grenzwert für die Gurtauszugslänge vorgegeben, bis zu dem von einer ersten Gefahrenposition des Fahrzeuginsassen ausgegangen werden kann, in der ein Entfalten des Airbags noch einen Schutz gewährleistet, ohne den Fahrzeuginsassen durch die Airbageinrichtung selbst zu gefährden.

In einer weiteren besonders bevorzugten Ausführungsform des erfindungsgemäßen Verfahrens wird der Sicherheitsgurt mindestens einmal impulsartig gestrafft, wenn die Sitzposition der ersten und zweiten Gefahrenposition entspricht. Hierdurch kann das erzeugte Signal durch den Fahrzeuginsassen besonders einfach der Tatsache zugeordnet werden, dass er sich in einer Gefahrenposition befindet. Ferner bewirkt das impulsartige Straffen bereits ein ansatzweises Zurückziehen des Fahrzeuginsassen in die Normalposition oder zumindest in die erste Gefahrenposition.

Um den vorstehend genannten Vorteil weiter zu verstärken, wird der Sicherheitsgurt beim Erfassen der zweiten Gefahrensituation in einer besonders bevorzugten Ausführungsform des erfindungsgemäßen Verfahrens häufiger impulsartig gestrafft als beim Erfassen der ersten Gefahrensituation. So kann der Sicherheitsgurt beim Erfassen der ersten Gefahrenposition beispielsweise einmal impulsartig gestrafft werden, während beim Erfassen der zweiten Gefahrenposition ein dreimaliges impulsartiges Straffen erfolgt. So sind die beiden Gefahrensituationen für den Fahrzeuginsassen einfach unterscheidbar, außerdem bewirkt ein mehrmaliges Straffen in der zweiten Gefahrensituation bereits ein stärkeres Zurückziehen des Fahrzeuginsassen in die weniger gefährliche erste Gefahrenposition.

In einer weiteren bevorzugten Ausführungsform des erfindungsgemäßen Verfahrens wird die Leistung der Airbageinrichtung auf einen Ausgangswert erhöht, wenn die Sitzposition wieder der Normalposition entspricht, und/oder die Airbageinrichtung wieder eingeschaltet, wenn die Sitzposition wieder der ersten Gefahrenposition entspricht. Auf diese Weise ist gewährleistet, dass die Airbageinrichtung entweder wieder eingeschaltet ist oder wieder die Ausgangsleistung aufbringen kann, wenn der Fahrzeuginsasse in die genannten Sitzpositionen zurückkehrt, so dass in jeder der Positionen ein optimaler Insassenschutz sichergestellt ist, ohne dass es einer manuellen Einstellung der Sicherheitsanordnung bedürfte.

In einer vorteilhaften Ausführungsform des erfindungsgemäßen Verfahrens erfolgt das Reduzieren der Leistung der Airbageinrichtung in Abhängigkeit von der Gurtauszugslänge.

In einer besonders vorteilhaften Ausführungsform des erfindungsgemäßen Verfahrens ist die Reduzierung der Leistung der Airbageinrichtung umso größer, je größer die Gurtauszugslänge ist. Hierdurch wir eine optimale Anpassung der Airbageinrichtung an die jeweilige erste Gefahrenposition erzielt.

In einer weiteren besonders vorteilhaften Ausführungsform des erfindungsgemäßen Verfahrens erfolgt das Reduzieren der Leistung der Airbageinrichtung stufenlos, um eine optimale Anpassung der Airbageinrichtung an die jeweilige erste Gefahrenposition zu erzielen. Das stufenlose Reduzieren bedingt außerdem einen geringeren konstruktiven Aufwand der Airbageinrichtung als dies bei einem stufenweisen Reduzieren der Fall ist, wobei letzteres auch möglich ist.

In einer weiteren vorteilhaften Ausführungsform des erfindungsgemäßen Verfahrens weist die Airbageinrichtung einen Gasgenerator auf, wobei das Reduzieren der Leistung der Airbageinrichtung durch Reduzieren der Leistung des Gasgenerators erfolgt.

Eine weitere vorteilhafte Ausführungsform des erfindungsgemäßen Verfahrens umfasst den weiteren Verfahrensschritt des Erzeugens eines Signals für den Fahrzeuginsassen, wenn die Sitzposition der ersten und/oder zweiten Gefahrenposition entspricht. Auf diese Weise kann der Fahrzeuginsasse darauf aufmerksam gemacht werden, dass er sich in einer Gefahrenposition befindet, in der die Leistung der Airbageinrichtung reduziert oder die Airbageinrichtung ganz ausgeschaltet ist. Als Reaktion hierauf kann sich der Fahrzeuginsasse wieder in die Normalposition begeben.

In einer weiteren vorteilhaften Ausführungsform des erfindungsgemäßen Verfahrens umfasst das Erzeugen des Signals das Erzeugen eines optischen, akustischen und/oder haptischen Signals. So kann beispielsweise ein Pfeifton als akustisches Signal oder ein Aufleuchten einer Anzeige als optisches Signal verwendet werden.

Damit der Fahrzeuginsasse das erzeugte Signal einfach und richtig zuordnen kann, nämlich zu der Tatsache, dass er sich in einer Gefahrenposition befindet, wird in einer weiteren bevorzugten Ausführungsform des erfindungsgemäßen Verfahrens ein haptisches Signal in Form einer Vibration des Sicherheitsgurtes, des Lenkrades und/oder des Kraftfahrzeugsitzes erzeugt.

In einer weiteren vorteilhaften Ausführungsform des erfindungsgemäßen Verfahrens ist die Airbageinrichtung in Sitzrichtung vor dem Kraftfahrzeugsitz angeordnet. So kann es sich beispielsweise um eine Sicherheitsanordnung mit einem Beifahrersitz oder einem Fahrersitz und einer vor dem Beifahrer- bzw. Fahrersitz innerhalb der vorderen Konsole oder dem Lenkrad angeordneten Airbageinrichtung handeln. Hier ist das Verfahren besonders vorteilhaft, da sich der Fahrzeuginsasse auf dem Beifahrer- bzw. Fahrersitz zumeist besonders weit nach vorne in die Nähe der Airbageinrichtung lehnen kann. Unter der Sitzrichtung ist diejenige Richtung zu verstehen, in die der auf dem Kraftfahrzeugsitz sitzende Fahrzeuginsasse blickt.

Die erfindungsgemäße Sicherheitsanordnung in einem Kraftfahrzeug weist eine Airbageinrichtung und einen Sicherheitsgurt für einen Fahrzeuginsassen auf, die einem Kraftfahrzeugsitz zugeordnet sind, wobei eine Sitzpositionserfassungseinrichtung vorgesehen ist, mittels derer die Gurtauszugslänge des Sicherheitsgurtes und somit die Sitzposition des Fahrzeuginsassen auf dem Kraftfahrzeugsitz erfassbar ist, die einer Normalposition, einer ersten Gefahrenposition, in der der Fahrzeuginsasse aus der Normalposition bewegt ist, oder einer zweiten Gefahrenposition entsprechen kann, in der der Fahrzeuginsasse weiter aus der Normalposition bewegt ist als in der ersten Gefahrenposition. Die Airbageinrichtung wirkt derart mit der Sitzpositionserfassungseinrichtung zusammen, dass die Leistung der Airbageinrichtung reduziert ist, wenn die Sitzposition der ersten Gefahrenposition entspricht. Die Airbageinrichtung wirkt ferner derart mit der Sitzpositionserfassungseinrichtung zusammen, dass die Airbageinrichtung ausgeschaltet ist, wenn die Sitzposition der zweiten Gefahrenposition entspricht. Dabei wird die erste Gefahrenposition von der Sitzpositionserfassungseinrichtung erfasst, wenn die Gurtauszugslänge größer als ein vorbestimmter unterer Auszugslängengrenzwert oder gleich dem unteren Auszugslängengrenzwert ist. Die zweite Gefahrenposition wird hingegen von der Sitzpositionserfassungseinrichtung erfasst, wenn die Gurtauszugslänge größer als ein vorbestimmter oberer Auszugslängengrenzwert oder gleich dem oberen Auszugslängengrenzwert ist, wobei der obere Auszugslängengrenzwert größer als der untere Auszugslängengrenzwert ist. Bezüglich der Vorteile der erfindungsgemäßen Sicherheitsanordnung sowie die Vorteile der nachstehend beschriebenen Ausführungsformen der Sicherheitsanordnung sei auf die oben genannten Vorteile des erfindungsgemäßen Verfahrens verwiesen, die entsprechend gelten.

In einer bevorzugten Ausführungsform der erfindungsgemäßen Sicherheitsanordnung ist eine Gurtstraffungseinrichtung für den Sicherheitsgurt vorgesehen, wobei die Gurtstraffungseinrichtung derart mit der Sitzpositionserfassungseinrichtung zusammenwirkt, dass der Sicherheitsgurt mindestens einmal impulsartig gestrafft wird, wenn die Sitzposition der ersten und zweiten Gefahrenposition entspricht.

In einer besonders bevorzugten Ausführungsform der erfindungsgemäßen Sicherheitsanordnung wirkt die Gurtstraffungseinrichtung derart mit der Sitzpositionserfassungseinrichtung zusammen, dass der Sicherheitsgurt beim Erfassen der zweiten Gefahrensituation häufiger impulsartig gestrafft wird als beim Erfassen der ersten Gefahrensituation.

In einer weiteren bevorzugten Ausführungsform der erfindungsgemäßen Sicherheitsanordnung wirkt die Airbageinrichtung derart mit der Sitzpositionserfassungseinrichtung zusammen, dass die Leistung der Airbageinrichtung auf einen Ausgangswert erhöht ist, wenn die Sitzposition wieder der Normalposition entspricht, und/oder die Airbageinrichtung eingeschaltet ist, wenn die Sitzposition wieder der ersten Gefahrenposition entspricht.

In einer weiteren besonders bevorzugten Ausführungsform der erfindungsgemäßen Sicherheitsanordnung wirkt die Airbageinrichtung derart mit der Sitzpositionserfassungseinrichtung zusammen, dass die Leistung der Airbageinrichtung in Abhängigkeit von der Gurtauszugslänge reduziert wird.

In einer weiteren besonders bevorzugten Ausführungsform der erfindungsgemäßen Sicherheitsanordnung wirkt die Airbageinrichtung derart mit der Sitzpositionserfassungseinrichtung zusammen, dass die Leistung der Airbageinrichtung je kleiner ist, desto größer die Gurtauszugslänge ist.

Gemäß einer weiteren besonders bevorzugten Ausführungsform der erfindungsgemäßen Sicherheitsanordnung kann die Leistung der Airbageinrichtung stufenlos oder stufenweise reduziert werden, wobei die Reduzierung stufenlos erfolgen sollte, um eine optimale Anpassung der Airbageinrichtung an die jeweilige erste Gefahrenposition zu erzielen.

In einer vorteilhaften Ausführungsform der erfindungsgemäßen Sicherheitsanordnung weist die Airbageinrichtung einen Gasgenerator auf, wobei die Leistung des Gasgenerators reduziert werden kann, um die Leistung der Airbageinrichtung zu reduzieren.

In einer weiteren vorteilhaften Ausführungsform der erfindungsgemäßen Sicherheitsanordnung ist mindestens ein Signalgeber zur Erzeugung eines Signals für den Fahrzeuginsassen vorgesehen, wenn die Sitzposition der ersten und/oder zweiten Gefahrenposition entspricht.

In einer weiteren vorteilhaften Ausführungsform der erfindungsgemäßen Sicherheitsanordnung kann mittels des Signalgebers ein optisches, akustisches und/oder haptisches Signal erzeugt werden.

In einer weiteren bevorzugten Ausführungsform der erfindungsgemäßen Sicherheitsanordnung ist der Signalgeber eine Vibrationseinrichtung zur Erzeugung eines haptischen Signals, mittels derer der Sicherheitsgurt, das Lenkrad und/oder der Kraftfahrzeugsitz in Vibrationen versetzt werden kann.

In einer weiteren vorteilhaften Ausführungsform der erfindungsgemäßen Sicherheitsanordnung ist die Airbageinrichtung in Sitzrichtung vor dem Kraftfahrzeugsitz angeordnet ist.

Die Erfindung wird im Folgenden anhand einer beispielhaften Ausführungsform unter Bezugnahme auf die beigefügten Zeichnungen näher erläutert. Es zeigen:
- Fig. 1: eine schematische Seitenansicht einer Ausführungsform der erfindungsgemäßen Sicherheitsanordnung mit dem Fahrzeugin- sassen in der Normalposition,
- Fig. 2: die Sicherheitsanordnung von Fig. 1 mit dem Fahrzeuginsassen in der ersten Gefahren- position,
- Fig. 3: die Sicherheitsanordnung von Fig. 2 mit dem Fahrzeuginsassen in der zweiten Gefah- renposition und
- Fig. 4: ein Diagramm zur Veranschaulichung der Abhängigkeit der Leistung der Airbageinrichtung aus den Fig. 1 und 3 von der Sitzposition des Fahrzeuginsassen.

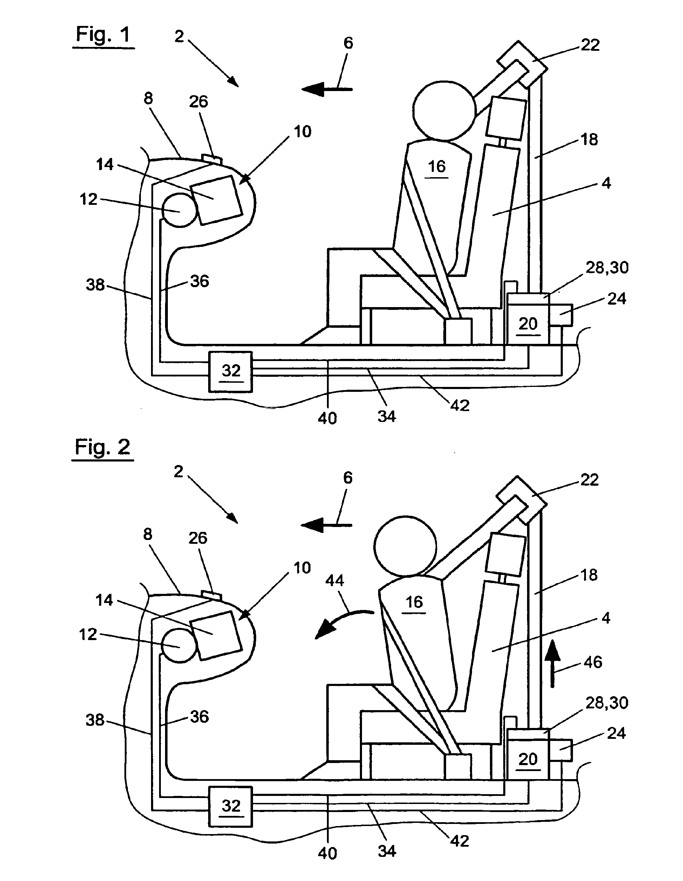

Fig. 1 zeigt eine Ausführungsform der erfindungsgemäßen Sicherheitsanordnung 2 in einem Kraftfahrzeug. Die Sicherheitsanordnung 2 weist einen Kraftfahrzeugsitz 4 mit einer Sitzrichtung 6 auf. Dem Kraftfahrzeugsitz 4 ist in Sitzrichtung 6 gegenüberliegend eine vordere Konsole 8 vorgesehen, in der eine Airbageinrichtung 10 angeordnet ist, die dem Kraftfahrzeugsitz 4 zugeordnet ist. Die Airbageinrichtung 10 umfasst einen Gasgenerator 12, dessen Leistung L stufenlos - alternativ auch stufenweise - reduziert werden kann, sowie einen von dem Gasgenerator 12 aufblasbaren Gassack 14, wobei der Gassack 14 dem Schutz des Fahrzeuginsassen 16 auf dem Kraftfahrzeugsitz 4 dient, wenn es zu einem Fahrzeugaufprall kommt.

Dem Kraftfahrzeugsitz 4 ist ferner ein Sicherheitsgurt 18 für den Fahrzeuginsassen 16 zugeordnet. Der Sicherheitsgurt 16 ist in einer Gurtaufrolleinrichtung aufgerollt, die auch als eine reversible Gurtstraffungseinrichtung 20 verwendet werden kann. Ausgehend von der Gurtstraffungseinrichtung 20 erstreckt sich der Sicherheitsgurt 18 zu einer oberen Umlenkeinrichtung 22, über die der Sicherheitsgurt 18 in den Bereich vor dem Fahrzeuginsassen 16 umgelenkt wird.

An der Gurtstraffungseinrichtung 20 ist ferner eine Sitzpositionserfassungseinrichtung 24 vorgesehen, mittels derer die Sitzposition des Fahrzeuginsassen 16 auf dem Kraftfahrzeugsitz 4 erfasst werden kann. In der vorliegenden Ausführungsform erfasst die Sitzpositionserfassungseinrichtung 24 die Gurtauszugslänge G des Sicherheitsgurtes 18 bezogen auf die feststehende Gurtstraffungseinrichtung 20, um so Rückschlüsse auf die Sitzposition des Fahrzeuginsassen 16 auf dem Kraftfahrzeugsitz 4 zu ziehen. Zu diesem Zweck kann die Sitzpositionserfassungseinrichtung 24 beispielsweise mit einer Sensorik mit Hallsensoren ausgestattet sein.

An der Konsole 8 ist in Sitzrichtung 6 und somit im Blickfeld des Fahrzeuginsassen 16 ferner ein erster Signalgeber 26 zur Erzeugung eines akustischen und/oder optischen Signals für den Fahrzeuginsassen 16 auf dem Kraftfahrzeugsitz 4 vorgesehen. Darüber hinaus ist ein zweiter Signalgeber 28 in Form einer Vibrationseinrichtung 30 zur Erzeugung eines haptischen Signals für den Fahrzeuginsassen 16 vorgesehen, wobei die Vibrationseinrichtung 30 in der Lage ist, den Sicherheitsgurt 18 in Vibrationen zu versetzen. Zwar dient die Vibrationseinrichtung 30 in der vorliegenden Ausführungsform dazu, den Sicherheitsgurt 18 in Vibrationen zu versetzen, jedoch ist es ebenso von Vorteil eine Vibrationseinrichtung vorzusehen, die das Lenkrad (nicht dargestellt) vor dem Kraftfahrzeugsitz oder den Kraftfahrzeugsitz selbst in Vibrationen versetzt. Alternativ oder ergänzend kann auch die Gurtstraffungseinrichtung 20 dazu dienen, den Sicherheitsgurt 18 in Vibrationen zu versetzen.

Die Sicherheitsanordnung 2 umfasst ferner eine Steuerungseinrichtung 32. Die Steuerungseinrichtung 32 ist über eine Steuerleitung 34 mit der Gurtstraffungseinrichtung 20, über eine Steuerleitung 36 mit dem Gasgenerator 12 der Airbageinrichtung 10, über eine Steuerleitung 38 mit dem ersten Signalgeber 26, über eine Steuerleitung 40 mit dem zweiten Signalgeber 28 bzw. der Vibrationseinrichtung 30 und über eine Signalleitung 42 mit der Sitzpositionserfassungseinrichtung 24 verbunden. Hierbei kann die erfasste Sitzposition über die Signalleitung 42 an die Steuerungseinrichtung 32 übermittelt werden, die daraufhin über die entsprechenden Steuerleitungen 34, 36, 38, 40 eine Steuerung der Komponenten der Sicherheitsanordnung 2 vornehmen kann.

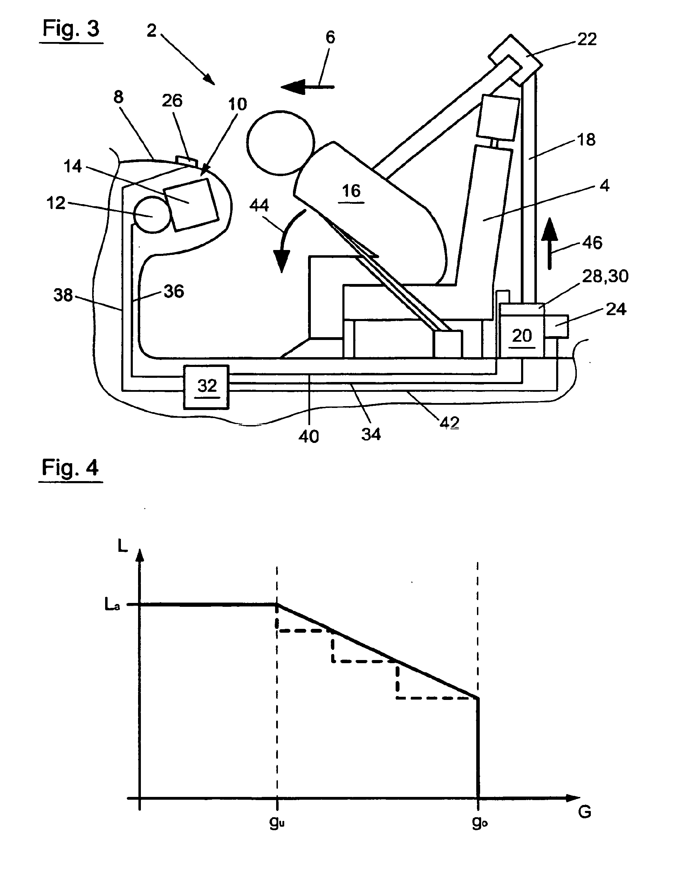

Nachstehend werden weitere Merkmale der dargestellten Ausführungsform sowie deren Funktionsweise unter Bezugnahme auf die Fig. 1 bis 4 beschrieben, wobei Fig. 4 den Verlauf der Leistung L des Gasgenerators 12 der Airbageinrichtung 10 in Abhängigkeit von der erfassten Gurtauszugslänge G zeigt.

In Fig. 1 befindet sich der Fahrzeuginsasse 16 in einer Normalposition. Die Gurtauszugslänge G wird permanent durch die Sitzpositionserfassungseinrichtung 24 erfasst. In der Normalposition sitzt der Fahrzeuginsasse im Wesentlichen aufrecht auf dem Kraftfahrzeugsitz 4, so dass die Gurtauszugslänge G kleiner als ein vorbestimmter unterer Auszugslängengrenzwert gᵤ ist. Wie aus Fig. 4 zu entnehmen ist, würde der Gasgenerator 12 im Notfall die volle Ausgangsleistung Lₐ erbringen.

Wie aus Fig. 2 ersichtlich, kann sich der Fahrzeuginsasse 16 leicht nach vorne lehnen, so dass der Sicherheitsgurt 18 aus der Gurtstraffungseinrichtung 20 ausgezogen wird, wie dies anhand der Pfeile 44, 46 in Fig. 2 angedeutet ist. Die durch die Sitzpositionserfassungseinrichtung 24 erfasste Gurtauszugslänge G wird dadurch größer und überschreitet den unteren Auszugslängengrenzwert gᵤ. Die somit ermittelte Gurtauszugslänge G wird an die Steuerungseinrichtung 32 übermittelt, die daraufhin feststellt, dass sich der Fahrzeuginsasse 16 in einer ersten Gefahrenposition befindet.

In der in Fig. 2 gezeigten ersten Gefahrenposition ist der Fahrzeuginsasse 16 derart nah an der Airbageinrichtung 10 angeordnet, dass ein sich entfaltender Gassack 14 zu einer Verletzung des Fahrzeuginsassen 16 führen würde, wenn der Gasgenerator 12 mit der Ausgangsleistung Lₐ betrieben würde. Stellt die Steuerungseinrichtung 32 also fest, dass sich der Fahrzeuginsasse 16 in der ersten Gefahrenposition befindet, so ergeht ein entsprechendes Steuerungssignal über die Steuerleitung 36 an den Gasgenerator 12, das eine Reduzierung der Leistung L des Gasgenerators 12 bewirkt, wie dies in Fig. 4 gezeigt ist.

Darüber hinaus wird der erste Signalgeber 26 derart angesteuert, dass dieser mindestens ein akustisches und/oder optisches Signal für den Fahrzeuginsassen 16 erzeugt, so dass dieser darauf aufmerksam gemacht wird, dass er sich in der ersten Gefahrenposition befindet. Ferner wird die Gurtstraffungseinrichtung 20 derart angesteuert, dass diese den Sicherheitsgurt 18 mindestens einmal impulsartig strafft. Weiterhin wird die Vibrationseinrichtung 30 derart angesteuert, dass der Sicherheitsgurt 18 in Vibrationen versetzt wird. Hierdurch wird der Fahrzeuginsasse 16 besonders eindringlich und nachvollziehbar darauf aufmerksam gemacht, dass er sich in der ersten Gefahrenposition befindet.

Lehnt sich der Fahrzeuginsasse 16 nach dem Erreichen des unteren Auszugslängengrenzwertes gᵤ und vor dem Erreichen eines vorbestimmten oberen Auszugslängengrenzwertes gₒ weiter nach vorne, so bewirkt die Steuerungseinrichtung 32 eine weitere Reduzierung der Leistung L des Gasgenerators 12, wobei die Reduzierung der Leistung L stufenlos erfolgt. Alternativ kann jedoch auch eine stufenweise Reduzierung erfolgen, die in Fig. 4 anhand des gestrichelten Verlaufs angedeutet ist. In jedem Fall erfolgt die Reduzierung der Leistung L in Abhängigkeit von der erfassten Gurtauszugslänge G derart, dass die Leistung L des Gasgenerators 12 je geringer ist, desto größer die Gurtauszugslänge G ist.

Hat sich nun der Fahrzeuginsasse 16 derart weit in Richtung des Pfeils 44 nach vorne gelehnt, dass die Gurtauszugslänge G größer oder gleich dem oberen Auszugslängengrenzwert gₒ ist und ein Entfalten des Gassacks unabhängig von der Leistung L des Gasgenerators 12 in jedem Fall zu einer Verletzung des Fahrzeuginsassen 16 führen würde, so stellt die Steuerungseinrichtung 32 eine zweite Gefahrenposition des Fahrzeuginsassen 16 fest. Wird diese zweite Gefahrenposition erfasst, so schaltet die Steuerungseinrichtung 32 den Gasgenerator 12 aus und reduziert somit die Leistung L auf Null, wie dies in Fig. 4 zu erkennen ist.

Erneut wird der erste Signalgeber 26 derart angesteuert, dass dieser mindestens ein akustisches und/oder optisches Signal für den Fahrzeuginsassen 16 erzeugt, so dass dieser darauf aufmerksam gemacht wird, dass er sich in der ersten Gefahrenposition befindet. Hierbei sollten mehr Signale erzeugt werden als dies beim Erreichen der ersten Gefahrenposition der Fall war, auch können die Signale deutlicher wahrnehmbar ausgeprägt sein, so dass der Fahrzeuginsasse registriert, dass er sich bereits in der zweiten Gefahrenposition befindet, in der die Airbageinrichtung 10 ausgeschaltet ist. Ferner wird die Gurtstraffungseinrichtung 20 wiederum derart angesteuert, dass diese den Sicherheitsgurt 18 mehrmals impulsartig strafft, also häufiger als nach dem Erreichen der ersten Gefahrenposition. Weiterhin wird die Vibrationseinrichtung 30 derart angesteuert, dass der Sicherheitsgurt 18 in Vibrationen versetzt wird, die noch stärker ausgeprägt sein sollten als beim Erreichen der ersten Gefahrenposition. Hierdurch wird der Fahrzeuginsasse 16 besonders eindringlich und nachvollziehbar darauf aufmerksam gemacht, dass er sich in der zweiten Gefahrenposition befindet.

Sollte sich der Fahrzeuginsasse 16 in Reaktion auf die Signale wieder zurücklehnen, so wird der Gasgenerator 12 zunächst mit reduzierter Leistung L wieder eingeschaltet, wenn die Gurtauszugslänge unter den oberen Auszugslängengrenzwert gₒ absinkt. Im weiteren Verlauf des Zurücklehnens wird die Leistung L dann wieder stufenlos erhöht, um nach dem Unterschreiten des unteren Auszugslängengrenzwertes gᵤ wieder die Ausgangsleistung Lₐ anzunehmen. Auf diese Weise ist die Leistung L des Gasgenerators 12 auf jede Sitzposition des Fahrzeuginsassen 16 optimal abgestimmt.

### Bezugszeichenliste

- 2: Sicherheitsanordnung
- 4: Kraftfahrzeugsitz
- 6: Sitzrichtung
- 8: vordere Konsole
- 10: Airbageinrichtung
- 12: Gasgenerator
- 14: aufblasbarer Gassack
- 16: Fahrzeuginsasse
- 18: Sicherheitsgurt
- 20: Gurtstraffungseinrichtung
- 22: Umlenkeinrichtung
- 24: Sitzpositionserfassungseinrichtung
- 26: erster Signalgeber
- 28: zweiter Signalgeber
- 30: Vibrationseinrichtung
- 32: Steuerungseinrichtung
- 34: Steuerleitung
- 36: Steuerleitung
- 38: Steuerleitung
- 40: Steuerleitung
- 42: Signalleitung
- 44: Pfeil
- 46: Pfeil
- 48: Pfeil
- G: Gurtauszugslänge
- gᵤ: unterer Auszugslängengrenzwert
- gₒ: oberer Auszugslängengrenzwert
- L: Leistung
- Lₐ: Ausgangsleistung

## Patentansprüche

1. Verfahren zur Steuerung einer Sicherheitsanordnung (2) in einem Kraftfahrzeug mit einer Airbageinrichtung (10) und einem Sicherheitsgurt (18) für den Fahrzeuginsassen (16), die einem Kraftfahrzeugsitz (4) zugeordnet sind, mit den Verfahrensschritten
Erfassen der Sitzposition des Fahrzeuginsassen (16) auf dem Kraftfahrzeugsitz (4) durch Erfassen der Gurtauszugslänge (G) des Sicherheitsgurtes (18), wobei die Sitzposition einer vorbestimmten Normalposition, einer ersten Gefahrenposition, in der der Fahrzeuginsasse (16) aus der Normalposition bewegt ist, oder einer vorbestimmten zweiten Gefahrenposition entsprechen kann, in der der Fahrzeuginsasse (16) weiter aus der Normalposition bewegt ist als in der ersten Gefahrenposition,
wobei die erste Gefahrenposition erfasst wird, wenn die Gurtauszugslänge (G) größer als ein vorbestimmter unterer Auszugslängengrenzwert (gᵤ) oder gleich dem unteren Auszugslängengrenzwert (gᵤ) ist,
und die Leistung der Airbageinrichtung (10) reduziert wird, wenn die Sitzposition der ersten Gefahrenposition entspricht,
**dadurch gekennzeichnet, dass** die zweite Gefahrenposition erfasst wird, wenn die Gurtauszugslänge (G) größer als ein vorbestimmter oberer Auszugslängengrenzwert (gₒ) oder gleich dem oberen Auszugslängengrenzwert (gₒ) ist, der größer als der untere Auszugslängengrenzwert (gᵤ) ist, und die Airbageinrichtung (10) ausgeschaltet wird, wenn die Sitzposition der zweiten Gefahrenposition entspricht.

2. Verfahren nach Anspruch 1, bei dem der Sicherheitsgurt (18) mindestens einmal impulsartig gestrafft wird, wenn die Sitzposition der ersten und zweiten Gefahrenposition entspricht.

3. Verfahren nach Anspruch 2, **dadurch gekennzeichnet, dass** der Sicherheitsgurt (18) beim Erfassen der zweiten Gefahrensituation häufiger impulsartig gestrafft wird als beim Erfassen der ersten Gefahrensituation.

4. Verfahren nach einem der vorangehenden Ansprüche, bei dem die Leistung der Airbageinrichtung (10) auf einen Ausgangswert erhöht wird, wenn die Sitzposition wieder der Normalposition entspricht, und/oder die Airbageinrichtung (10) wieder eingeschaltet wird, wenn die Sitzposition wieder der ersten Gefahrenposition entspricht.

5. Verfahren nach einem der vorangehenden Ansprüche, **dadurch gekennzeichnet, dass** das Reduzieren der Leistung der Airbageinrichtung (10) vorzugsweise in Abhängigkeit von der Gurtauszugslänge (G) erfolgt und die Reduzierung der Leistung der Airbageinrichtung (10) vorzugsweise je größer ist, desto größer die Gurtauszugslänge (G) ist.

6. Verfahren nach einem der vorangehenden Ansprüche, bei dem das Reduzieren der Leistung der Airbageinrichtung (10) stufenlos oder stufenweise erfolgt.

7. Verfahren nach einem der vorangehenden Ansprüche, bei dem die Airbageinrichtung (10) einen Gasgenerator (12) aufweist, wobei das Reduzieren der Leistung der Airbageinrichtung (10) durch Reduzieren der Leistung des Gasgenerators (12) erfolgt.

8. Verfahren nach einem der vorangehenden Ansprüche mit dem weiteren Verfahrensschritt
Erzeugen eines Signals für den Fahrzeuginsassen (16), wenn die Sitzposition der ersten und/oder zweiten Gefahrenposition entspricht, wobei das Erzeugen des Signals vorzugsweise das Erzeugen eines optischen, akustischen und/oder haptischen Signals umfasst und ein haptisches Signal vorzugsweise in Form einer Vibration des Sicherheitsgurtes (18), des Lenkrades und/oder des Kraftfahrzeugsitzes (4) erzeugt wird.

9. Sicherheitsanordnung (2) in einem Kraftfahrzeug mit einer Airbageinrichtung (10) und einem Sicherheitsgurt (18) für den Fahrzeuginsassen (16), die einem Kraftfahrzeugsitz (4) zugeordnet sind, wobei eine Sitzpositionserfassungseinrichtung (24) vorgesehen ist, mittels derer die Gurtauszugslänge (G) des Sicherheitsgurtes (18) und somit die Sitzposition des Fahrzeuginsassen (16) auf dem Kraftfahrzeugsitz (4) erfassbar ist, die einer Normalposition, einer ersten Gefahrenposition, in der der Fahrzeuginsasse (16) aus der Normalposition bewegt ist, oder einer zweiten Gefahrenposition entsprechen kann, in der der Fahrzeuginsasse (16) weiter aus der Normalposition bewegt ist als in der ersten Gefahrenposition,
wobei die erste Gefahrenposition von der Sitzpositionserfassungseinrichtung (24) erfassbar ist, wenn die Gurtauszugslänge (G) größer als ein vorbestimmter unterer Auszugslängengrenzwert (gᵤ) oder gleich dem unteren Auszugslängengrenzwert (gᵤ) ist, und die Airbageinrichtung (10) derart mit der Sitzpositionserfassungseinrichtung (24) zusammenwirkt, dass die Leistung (L) der Airbageinrichtung (10) reduziert ist, wenn die Sitzposition der ersten Gefahrenposition entspricht,
**dadurch gekennzeichnet, dass** die zweite Gefahrenposition von der Sitzpositionserfassungseinrichtung (24) erfassbar ist, wenn die Gurtauszugslänge (G) größer als ein vorbestimmter oberer Auszugslängengrenzwert (gₒ) oder gleich dem oberen Auszugslängengrenzwert (gₒ) ist, der größer als der untere Auszugslängengrenzwert (gᵤ) ist, und die Airbageinrichtung (10) derart mit der Sitzpositionserfassungseinrichtung (24) zusammenwirkt, dass die Airbageinrichtung (10) ausgeschaltet ist, wenn die Sitzposition der zweiten Gefahrenposition entspricht.

10. Sicherheitsanordnung nach Anspruch 9, **dadurch gekennzeichnet, dass** eine Gurtstraffungseinrichtung (20) für den Sicherheitsgurt (18) vorgesehen ist, die derart mit der Sitzpositionserfassungseinrichtung (24) zusammenwirkt, dass der Sicherheitsgurt (18) mindestens einmal impulsartig straffbar ist, wenn die Sitzposition der ersten und zweiten Gefahrenposition entspricht.

11. Sicherheitsanordnung nach Anspruch 10, **dadurch gekennzeichnet, dass** die Gurtstraffungseinrichtung (20) derart mit der Sitzpositionserfassungseinrichtung (24) zusammenwirkt, dass der Sicherheitsgurt (18) beim Erfassen der zweiten Gefahrensituation häufiger impulsartig straffbar ist als beim Erfassen der ersten Gefahrensituation.

12. Sicherheitsanordnung nach einem der Ansprüche 9 bis 11, **dadurch gekennzeichnet, dass** die Airbageinrichtung (10) derart mit der Sitzpositionserfassungseinrichtung (24) zusammenwirkt, dass die Leistung (L) der Airbageinrichtung (10) auf einen Ausgangswert (Lₐ) erhöht ist, wenn die Sitzposition wieder der Normalposition entspricht, und/oder die Airbageinrichtung (10) eingeschaltet ist, wenn die Sitzposition wieder der ersten Gefahrenposition entspricht.

13. Sicherheitsanordnung nach einem der Ansprüche 9 bis 12, **dadurch gekennzeichnet, dass** die Airbageinrichtung (10) derart mit der Sitzpositionserfassungseinrichtung (24) zusammenwirkt, dass die Leistung (L) der Airbageinrichtung (10) in Abhängigkeit von der Gurtauszugslänge (G) reduziert ist, und die Airbageinrichtung (10) vorzugsweise derart mit der Sitzpositionserfassungseinrichtung (24) zusammenwirkt, dass die Leistung (L) der Airbageinrichtung (10) je kleiner ist, desto größer die Gurtauszugslänge (G) ist.

14. Sicherheitsanordnung nach einem der Ansprüche 9 bis 13, **dadurch gekennzeichnet, dass** die Leistung (L) der Airbageinrichtung (10) stufenlos oder stufenweise reduzierbar ist.

15. Sicherheitsanordnung nach einem der Ansprüche 9 bis 14, **dadurch gekennzeichnet, dass** die Airbageinrichtung (10) einen Gasgenerator (12) aufweist, wobei die Leistung (L) des Gasgenerators (12) reduzierbar ist.

16. Sicherheitsanordnung nach einem der Ansprüche 9 bis 15, **dadurch gekennzeichnet, dass** mindestens ein Signalgeber (26, 28) zur Erzeugung eines Signals für den Fahrzeuginsassen (16) vorgesehen ist, wenn die Sitzposition der ersten und/oder zweiten Gefahrenposition entspricht, wobei mittels des Signalgebers (26, 28) vorzugsweise ein optisches, akustisches und/oder haptisches Signal erzeugbar ist und der Signalgeber (28) besonders bevorzugt eine Vibrationseinrichtung (30) zur Erzeugung eines haptischen Signals ist, mittels derer der Sicherheitsgurt (18), das Lenkrad und/oder der Kraftfahrzeugsitz in Vibrationen versetzbar ist.

## Claims

1. A method for controlling a safety arrangement (2) in a motor vehicle with an airbag device (10) and a safety belt (18) for the passenger (16) which are associated with a vehicle seat (4), having the method steps of detecting the sitting position of the passenger (16) on the vehicle seat (4) by detecting the belt extension length (G) of the safety belt (18), wherein the sitting position can correspond to a predetermined normal position, a first danger position in which the passenger (16) is moved from the normal position, or a predetermined second danger position in which the passenger (16) is moved further from the normal position than in the first danger position, with the first danger position being detected when the belt extension length (G) is larger than a predetermined lower extension length limit value (gᵤ) or is equal to the lower extension length limit value (gᵤ), and the power of the airbag device (10) is reduced when the sitting position corresponds to the first danger position, **characterized in that** the second danger position is detected when the belt extension length (G) is larger than a predetermined upper extension length limit value (gₒ) or is equal to the upper extension length limit value (gₒ) which is larger than the lower extension length limit value (gᵤ), and the airbag device (10) is switched off when the sitting position corresponds to the second danger position.

2. A method according to claim 1, wherein the safety belt (18) is tensioned at least once in a pulse-like manner when the sitting position corresponds to the first and second danger position.

3. A method according to claim 2, **characterized in that** the safety belt (18) is tensioned more frequently in a pulse-like manner upon detecting the second danger situation than during the detection of the first danger situation.

4. A method according to one of the preceding claims, wherein the power of the airbag device (10) is increased to an initial value when the sitting position corresponds again to the normal position, and/or the airbag device (10) is switched on again when the sitting position corresponds to the first danger position again.

5. A method according to one of the preceding claims, **characterized in that** the reduction of the power of the airbag device (10) preferably occurs depending on the belt extension length (G) and the reduction in the power of the airbag device (10) is preferably the larger, the larger the belt extension length (G).

6. A method according to one of the preceding claims, wherein the reduction of the power of the airbag device (10) occurs continuously or gradually.

7. A method according to one of the preceding claims, wherein the airbag device (10) comprises a gas generator (12), with the reduction of the power of the airbag device (10) occurring by reduction of the power of the gas generator (12).

8. A method according to one of the preceding claims, having the further method step of generating a signal for the passenger (16) when the sitting position corresponds to the first and/or second danger position, with the generation of the signal preferably comprising the generation of an optical, acoustic and/or haptic signal, and a haptic signal is preferably generated in form of a vibration of the safety belt (18), steering wheel and/or the vehicle seat (4).

9. A safety arrangement (2) in a motor vehicle with an airbag device (10) and a safety belt (18) for the passenger (16) which are associated with a vehicle seat (4), with a sitting position detecting device (24) being provided, by means of which the belt extension length (G) of the safety belt (18) and thus the sitting position of the passenger (16) on the vehicle seat (4) is detectable, which sitting position can correspond to a normal position, the first danger position in which the passenger (16) is moved from the normal position, or a second danger position in which the passenger (16) is moved further from the normal position than in the first danger position, with the first danger position being detectable by the sitting position detecting device (24) when the belt extension length (G) is larger than a predetermined lower extension length limit value (gᵤ) or equal to the lower extension length limit value (gᵤ), and the airbag device (10) cooperates with the sitting position detecting device (24) in such a way that the power (L) of the airbag device (10) is reduced when the sitting position corresponds to the first danger position, **characterized in that** the second danger position is detectable by the sitting position detecting device (24) when the belt extension length (G) is larger than a predetermined upper extension length limit value (gₒ) or equal to the upper extension length limit value (gₒ) which is larger than the lower extension length limit value (gᵤ), and the airbag device (10) cooperates with the sitting position detecting device (24) in such a way that the airbag device (10) is switched off when the sitting position corresponds to the second danger position.

10. A safety arrangement according to claim 9, **characterized in that** a belt tensioning device (20) for the safety belt (18) is provided, which belt tensioning device (20) cooperates with the sitting position detecting device (24) such a way that the safety belt (18) can be tensioned at least once in a pulse-like manner when the sitting position corresponds to the first and second danger position.

11. A safety arrangement according to claim 10, **characterized in that** the belt tensioning device (20) cooperates with the sitting position detecting device (24) in such a way that the safety belt (18) is tensionable in a more frequent pulse-like manner upon detecting the second danger situation than upon detecting the first danger situation.

12. A safety arrangement according to one of the claims 9 to 11, **characterized in that** the airbag device (10) cooperates with the sitting position detecting device (24) in such a way that the power (L) of the airbag device (10) is increased to an initial value (Lₐ) when the sitting position corresponds to the normal position again, and/or the airbag device (10) is switched on when the sitting position corresponds to the first danger position again.

13. A safety arrangement according to one of the claims 9 to 12, **characterized in that** the airbag device (10) cooperates with the sitting position detecting device (24) in such a way that the power (L) of the airbag device (10) is reduced depending on the belt extension length (G), and the airbag device (10) preferably cooperates with the sitting position detecting device (24) such a way that the power (L) of the airbag device (10) is the smaller, the larger the belt extension length (G).

14. A safety arrangement according to one of the claims 9 to 13, **characterized in that** the power (L) of the airbag device (10) can be reduced continuously or gradually.

15. A safety arrangement according to one of the claims 9 to 14, **characterized in that** the airbag device (10) comprises a gas generator (12), with the power (L) of the gas generator (12) being reducible.

16. A safety arrangement according to one of the claims 9 to 15, **characterized in that** at least one signal generator (26, 28) for generating a signal for the passenger (16) is provided when the sitting position corresponds to the first and/or second danger position, with preferably an optical, acoustic and/or haptic signal being producible by means of the signal generator (26, 28), and the signal generator (28) is especially preferably a vibration device (30) generating a haptic signal by means of which the safety belt (18), the steering wheel and/or the vehicle seat can be made to vibrate.

## Revendications

1. Procédé pour la commande d'un dispositif de sécurité (2) dans un véhicule à moteur avec un dispositif de coussin gonflable de protection (10) et une ceinture de sécurité (18) pour l'occupant du véhicule (16), qui est associé à un siège de véhicule à moteur (4), avec les étapes de :
détection de la position d'assise de l'occupant du véhicule (16) sur le siège du véhicule à moteur (4) par la détection de la longueur d'extraction (G) de la ceinture de sécurité (18),
la position d'assise pouvant correspondre à une position normale prédéterminée, à une première position dangereuse dans laquelle l'occupant du véhicule (16) quitte la position normale ou à une deuxième position dangereuse prédéterminée dans laquelle l'occupant du véhicule (16) s'éloigne davantage de la position normale que dans la première position dangereuse,
dans lequel la première position dangereuse est détectée quand la longueur d'extraction de la ceinture (G) est plus grande qu'une valeur limite inférieure de longueur d'extraction (gᵤ) prédéterminée ou égale à la valeur limite inférieure de longueur d'extraction (gᵤ),
et la puissance du dispositif de coussin gonflable de protection (10) est réduite quand la position d'assise correspond à la première position dangereuse,
**caractérisé en ce que** la deuxième position dangereuse est détectée quand la longueur d'extraction de la ceinture (G) est plus grande qu'une valeur limite supérieure de longueur d'extraction (gₒ) prédéterminée ou égale à la valeur limite supérieure de longueur d'extraction (gₒ), qui est plus grande que la valeur limite inférieure de longueur d'extraction (gᵤ), et le dispositif de coussin gonflable de protection (10) est désactivé quand la position d'assise correspond à la deuxième position dangereuse.

2. Procédé selon la revendication 1, dans lequel la ceinture de sécurité (18) est tendue au moins une fois par impulsions quand la position d'assise correspond à la première position dangereuse et à la deuxième.

3. Procédé selon la revendication 2, **caractérisé en ce que** la ceinture de sécurité (18) est tendue plus souvent par impulsions quand la deuxième situation dangereuse est détectée que quand la première situation dangereuse est détectée.

4. Procédé selon l'une des revendications précédentes, dans lequel la puissance du dispositif de coussin gonflable de protection (10) est relevée à une valeur initiale quand la position d'assise correspond à nouveau à la position normale et/ou le dispositif de coussin gonflable de protection (10) est réactivé quand la position d'assise correspond à nouveau à la première position dangereuse.

5. Procédé selon l'une des revendications précédentes, **caractérisé en ce que** la réduction de la puissance du dispositif de coussin gonflable de protection (10) est de préférence réalisée en fonction de la longueur d'extraction de la ceinture (G) et la réduction de la puissance du dispositif de coussin gonflable de protection (10) est de préférence d'autant plus grande que la longueur d'extraction de la ceinture (G) est grande.

6. Procédé selon l'une des revendications précédentes, dans lequel la réduction de la puissance du dispositif de coussin gonflable de protection (10) est effectuée sans paliers ou par paliers.

7. Procédé selon l'une des revendications précédentes, dans lequel le dispositif de coussin gonflable de protection (10) présente un générateur de gaz (12), la réduction de la puissance du dispositif de coussin gonflable de protection (10) étant réalisée par la réduction de la puissance du générateur de gaz (12).

8. Procédé selon l'une des revendications précédente, comprenant en outre l'étape de génération d'un signal destiné à l'occupant du véhicule (16) quand la position d'assise correspond à la première position dangereuse et/ou à la deuxième, la génération du signal comprenant de préférence la génération d'un signal visuel, sonore et/ou tactile, de préférence sous la forme d'une vibration de la ceinture de sécurité (18), du volant et/ou du siège du véhicule à moteur (4).

9. Dispositif de sécurité (2) dans un véhicule à moteur avec un dispositif de coussin gonflable de protection (10) et une ceinture de sécurité (18) pour l'occupant du véhicule (16), qui est associé à un siège du véhicule à moteur (4), dans lequel est prévu un dispositif de détection de la position d'assise (24) permettant de détecter la longueur d'extraction (G) de la ceinture de sécurité (18) et ainsi la position d'assise de l'occupant du véhicule (16) sur le siège du véhicule à moteur (4), qui peut correspondre à une position normale, à une première position dangereuse dans laquelle l'occupant du véhicule (16) quitte la position normale ou à une deuxième position dangereuse dans laquelle l'occupant du véhicule (16) s'éloigne davantage de la position normale que dans la première position dangereuse,
dans lequel la première position dangereuse peut être détectée par le dispositif de détection de la position d'assise (24) quand la longueur d'extraction de la ceinture (G) est supérieure à une valeur limite inférieure de longueur d'extraction (gᵤ) prédéterminée ou égale à la valeur limite inférieure de longueur d'extraction (gᵤ), et le dispositif de coussin gonflable de protection (10) coopère avec le dispositif de détection de la position d'assise (24) de telle façon que la puissance (L) du dispositif de coussin gonflable de protection (10) est réduite quand la position d'assise correspond à la première position dangereuse, **caractérisé en ce que** la deuxième position dangereuse peut être détectée par le dispositif de détection de la position d'assise (24) quand la longueur d'extraction de la ceinture (G) est plus grande qu'une valeur limite supérieure de longueur d'extraction (gₒ) prédéterminée ou égale à la valeur limite supérieure de longueur d'extraction (gₒ), qui est plus grande que la valeur limite inférieure de longueur d'extraction (gᵤ), et le dispositif de coussin gonflable de protection (10) coopère avec le dispositif de détection de la position d'assise (24) de telle façon que le dispositif de coussin gonflable de protection (10) est désactivé quand la position d'assise correspond à la deuxième position dangereuse.

10. Dispositif de sécurité selon la revendication 9, **caractérisé en ce qu'**il est prévu un dispositif de tendeur de ceinture (20) pour la ceinture de sécurité (18), qui coopère avec le dispositif de détection de la position d'assise (24) de telle façon que la ceinture de sécurité (18) peut être tendue au moins une fois par impulsions quand la position d'assise correspond à la première position dangereuse et à la deuxième.

11. Dispositif de sécurité selon la revendication 10, **caractérisé en ce que** le dispositif de tendeur de ceinture (20) coopère avec le dispositif de détection de la position d'assise (24) de telle façon que la ceinture de sécurité (18) peut être tendue plus souvent par impulsions lorsque la deuxième situation dangereuse est détectée que lorsque la première situation dangereuse est détectée.

12. Dispositif de sécurité selon l'une des revendications 9 à 11, **caractérisé en ce que** le dispositif de coussin gonflable de protection (10) coopère avec le dispositif de détection de la position d'assise (24) de telle manière que la puissance (L) du dispositif de coussin gonflable de protection (10) est augmentée à partir d'une valeur initiale (Lₐ) quand la position d'assise correspond à nouveau à la position normale et/ou le dispositif de coussin gonflable de protection (10) est activé quand la position d'assise correspond à nouveau à la première position dangereuse.

13. Dispositif de sécurité selon l'une des revendications 9 à 12, **caractérisé en ce que** le dispositif de coussin gonflable de protection (10) coopère avec le dispositif de détection de la position d'assise (24) de telle manière que la puissance (L) du dispositif de coussin gonflable de protection (10) est réduite en fonction de la longueur d'extraction de la ceinture (G) et le dispositif de coussin gonflable de protection (10) coopère de préférence avec le dispositif de détection de la position d'assise (24) de telle manière que la puissance (L) du dispositif de coussin gonflable de protection (10) est d'autant plus faible que la longueur d'extraction de la ceinture (G) est grande.

14. Dispositif de sécurité selon l'une des revendications 9 à 13, **caractérisé en ce que** la puissance (L) du dispositif de coussin gonflable de protection (10) peut être réduite sans paliers ou par paliers.

15. Dispositif de sécurité selon l'une des revendications 9 à 14, **caractérisé en ce que** le dispositif de coussin gonflable de protection (10) comprend un générateur de gaz (12), la puissance (L) du générateur de gaz (12) pouvant être réduite.

16. Dispositif de sécurité selon l'une des revendications 9 à 15, **caractérisé en ce qu'**au moins un générateur de signaux (26, 28) est prévu pour produire un signal destiné à l'occupant du véhicule (16) quand la position d'assise correspond à la première position dangereuse et/ou à la deuxième, le générateur de signaux (26, 28) pouvant de préférence produire un signal visuel, sonore et/ou tactile et le générateur de signaux (28) étant en particulier un dispositif vibratoire (30) destiné à produire un signal tactile au moyen duquel la ceinture de sécurité (18), le volant et/ou le siège du véhicule à moteur peuvent être mis en vibration.
